# EUROPEAN PATENT APPLICATION

(11) **EP 1 930 895 A1**
(43) Date of publication of application: **11.06.2008**
(21) Application number: 06125300.1
(22) Date of filing: 04.12.2006
(51) Int. Cl.: G11B 20/00, G11B 20/12

(54) **Recording CSS-protected content on DVD discs**

(71) Applicant: Koninklijke Philips Electronics N.V., 5621 BA Eindhoven (NL)
(72) Inventor: The designation of the inventor has not yet been filed
(74) Representative: Engelfriet, Arnoud Peter

(57) **Abstract**

A method of and device (200) for encrypting content (C) using a title key (TK) in accordance with the DVD Content Scrambling System to produce encrypted content (E_{TK}(C)) suitable for recording on a recordable DVD disc (250). The title key (TK) and a disc key (DK) are chosen such that an encryption of the title key (TK) using the disc key (DK) equals the value zero. Also a recordable DVD (250) disc comprising content (C) encrypted (205) using a title key (TK) in accordance with the DVD Content Scrambling System and comprising a disc key (DK) having been encrypted (206) using a player key (PK), wherein the disc key (DK) is such that a decryption (204) of the value zero using the disc key (DK) equals the title key (TK).

## Description

### FIELD OF THE INVENTION

The invention relates to methods and devices for encrypting content in accordance with the DVD Content Scrambling System, as well as to recordable DVD discs suitable for and produced by such methods and devices.

### BACKGROUND OF THE INVENTION

Video and audio content is typically stored on Digital Versatile Discs (DVDs) in encrypted form using a copy protection system called Content Scrambling System (CSS). CSS employs a two-step decryption process, which is now briefly explained with reference to Fig. 1. A more complete description of this process may be found in European Patent Application EP 1 327 981 as well as publications available on the Internet such as:
- "Digital Content Protection, Part III", at Extremetech.com,
   http://www.extremetech.com/article2/0,1697,1231654,00.asp
- Section 6.2 "CSS" of the paper "DVD" by Oliver Vornberger at the University of Osnabrück,
   http://www-lehre.inf.uos.de/wp/2000/mm15/paper/6 2CSS.html
- "DVD-Video & Kopierschutzverfahren" by Michael Pach, Wilhelm Schickard Institut, University of Tübingen, http://obelix.informatik.unituebingen.de/deutsch/lehre/ss02/proseminar/folien/michael_pach.pdf

A DVD player 100 is provided with a Player Key, typically installed in a local memory during the manufacturing process. With this Player Key, a decryption module D1 in player 100 is able to decrypt an encrypted Disc Key present in a table 151 stored in the lead-in area on the DVD disc 150. This table 151 contains a plurality of encrypted Disc Keys, each of which is encrypted with a different Player Key.

With the Disc Key, a decryption module D2 in player 100 is able to decrypt a Title Key that is stored in sector header 152 on the DVD disc 150. With the Title Key a decryption module D3 in player 100 is able to decrypt the actual content stored in a sector 153 on the DVD disc 150. The content can then be processed further, e.g. turned into audio and video signals for presentation on a display screen, converted into another digital format, recorded on another disc and so on. Note that in practice, one content item, e.g. a movie or song, may be stored divided over plural sectors. Different sectors may or may not be encrypted, possibly but not necessarily with different title keys stored in their associated sector headers.

The creation of DVD discs with CSS-encrypted content follows exactly the opposite process. The content is encrypted with the Title Key. The Title Key is encrypted with the Disc Key and stored in encrypted form in the sector header 152 (CPR_MAI field) on the disc 150. The Disc Key is encrypted multiple times, once for each Player Key, and each encryption is recorded in the table 151.

The exact encryption and decryption algorithms used are discussed in the documentation referred to above. All necessary details of CSS can be obtained by acquiring a CSS Technology License from the DVD Copy Control Association (DVD CCA), which may be done via the Internet through
http://www.dvdcca.org/css/application c1.html

Today many DVD recorders are available that allow anyone to write content to recordable DVD discs. This creates a new business model where content is downloaded over a network and subsequently recorded on a recordable DVD disc by the recipient of such content. For example, a "burn-it-yourself" application would allow a consumer to purchase a movie at a web-store, download an image of the disc from the web-store and burn the image to a DVD+R/RW disc. Another application enables in-store burning "kiosk-burning", or on-demand burning of more esoteric titles in a video store. The store now does not need to keep physical copies of all titles, but can simply download a title and create a disc on demand for a customer.

The content may be provided for download in the CSS-encrypted form, or in a different encrypted form, which is transcoded to the CSS-encrypted form before or while recording the content onto the disc. A technical limitation here is that the standard for DVD+RW recorders specifies that compliant recorders may only write a sequence of zeros at the sector header where normally the encrypted Title Key would be stored. See section 1.2.1.1 of the Compliance Rules for DVD+RW writers, available on the Internet at
http://www.licensing.philips.com/includes/download.php?id=4600&filename=2689.pdf

Similarly strict is the requirement from section 1.2.1 of those same Compliance Rules: "Prevent writing CSS keys and content protection information under user control in sector headers".

With this requirement the logical conclusion is that it is not possible to use such recorders in "burn-it-yoursel'', "kiosk burning" and similar models where the content is to be recorded with CSS-encrypted content.

### SUMMARY OF THE INVENTION

It is an object of the invention to improve upon the above.

This object is achieved according to the invention in a method of encrypting content using a title key in accordance with the DVD Content Scrambling System to produce encrypted content suitable for recording on a recordable DVD disc, the method comprising choosing the title key and a disc key such that an encryption of the title key using the disc key equals the value zero, and in a system adapted for carrying out the method.

By choosing title key and disc key such that an encryption of the title key using the disc key equals the value zero, it is achieved that a DVD recorder can subsequently record the content on a DVD disc and record zeroes in the sector header in accordance with the existing Compliance Rules for DVD+RW writers. During the decryption process outlined above, the player will recover the disc key as usual and then decrypt the *recorded zeroes* which results in the title key used to encrypt the content in question. The inventive approach thus is an inverse of the prior art approach: instead of choosing a title key and a disc key and encrypting the title key with the disc key to produce the encrypted title key, now the title key and disc key are chosen based on a given, desired outcome (the value zero).

The skilled person would not arrive in an obvious manner at this solution, because the descriptions of the CSS encryption scheme all teach that the title key and disc key are essentially chosen arbitrarily, thus producing an encrypted title key that is an inevitable result from encryption of the chosen title key using the chosen disc key. The inverse approach, starting from the outcome of the encryption, thus goes contrary to the teachings of the available prior art and can therefore not be considered obvious.

Furthermore the skilled person would not contemplate going into this direction since the Compliance Rules of DVD and CSS explicitly forbid it.

In an embodiment the disc key is chosen arbitrarily and the title key is chosen as the output of a decryption of the value zero using the disc key. It is straightforward to obtain the title key by decrypting the value zero using the agreed-upon disc key.

The choice of the disc key can be made in many ways. A preferred choice when the method is used as part of an interactive process with another party, usually the intended recipient of the encrypted content, is to agree upon the disc key with the other party. The key can then be chosen entirely by either party or be established or agreed upon using a key establishment protocol.

A recordable DVD disc may also contain an encrypted disc key block even before any content is written to it. In that case, it is possible to read the disc key from that pre-existing encrypted key block. If the party executing the step of decrypting the value zero using the disc key is not the party having access to the DVD disc in question, the latter party will need to communicate the disc key to the former party.

In another embodiment the title key is chosen arbitrarily and the disc key is chosen by searching a plurality of candidate disc keys for a candidate satisfying the requirement that the encryption of the title key using the candidate disc key equals the value zero. Although an exhaustive search is infeasible for many algorithms, it is certainly an option for the CSS algorithm where the disc key is only 40 bits long. Through cryptographic analysis of the CSS algorithm more efficient ways of searching for the right disc key can easily be devised.

The invention further provides a recordable DVD disc comprising content encrypted using a title key in accordance with the DVD Content Scrambling System and comprising a disc key having been encrypted using a player key, wherein the disc key is such that a decryption of the value zero using the disc key equals the title key.

The invention further provides a device configured for encrypting content using a title key in accordance with the DVD Content Scrambling System to produce encrypted content suitable for recording on a recordable DVD disc, comprising means for choosing the title key and a disc key such that an encryption of the title key using the disc key equals the value zero.

### BRIEF DESCRIPTION OF THE FIGURES

These and other aspects of the invention will be apparent from and elucidated with reference to the illustrative embodiments shown in the drawings, in which:
Fig. 1 schematically illustrates the two-step decryption process employed in the Content Scrambling System (CSS);
Figs. 2A and 2B schematically illustrate a device configured for encrypting content using a title key in accordance with the DVD Content Scrambling System to produce encrypted content suitable for recording on a recordable DVD disc;
Fig. 3 schematically illustrates a client and a server cooperating in encrypting content using a title key in accordance with the DVD Content Scrambling System to produce encrypted content suitable for recording on the recordable DVD disc;
Figs. 4A and 4B schematically illustrate a server configured to operate similar to the device of Figs. 2A and 2B respectively; and
Fig. 5 schematically illustrates a recordable DVD disc on which encrypted content has been recorded in accordance with the present invention.

Throughout the figures, same reference numerals indicate similar or corresponding features. Some of the features indicated in the drawings are typically implemented in software, and as such represent software entities, such as software modules or objects.

### DETAILED DESCRIPTION OF PREFERRED EMBODIMENTS

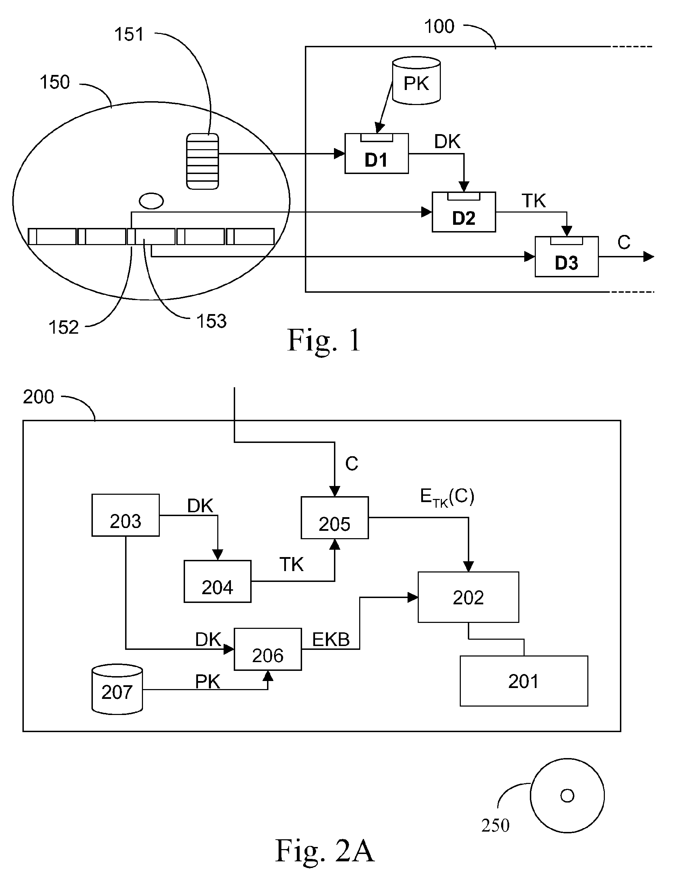

Fig. 2A schematically illustrates a device 200 configured for encrypting content using a title key in accordance with the DVD Content Scrambling System to produce encrypted content suitable for recording on a recordable DVD disc 250. The device 200 comprises a DVD drive 201 coupled to a DVD read/write module 202, allowing the device 200 to record data onto the recordable DVD disc 250. In accordance with the present invention, the device 200 is configured to choose the title key and a disc key such that an encryption of the title key using the disc key equals the value zero.

In a first embodiment shown in Fig. 2A, the device 200 comprises disc key determination module 203 which is configured to arbitrarily choose the disc key. The disc key is then fed to title key generation module 204 which computes the title key as the output of a decryption of the value zero using the disc key. The title key is then fed to the content encryption module 205 which encrypts the content using the title key and presents the encrypted content to the DVD read/write module 202 causing the module 202 to record the encrypted content onto the recordable DVD disc 250.

In parallel, the disc key is also fed to the key block generation module 206, which encrypts the disc key using the player key associated with this player 200, which is stored in local storage medium 207. Optionally, if other player keys are available in storage medium 207, the disc key is encrypted multiple times, each time using each of the available player keys. The one or more encryptions of the disc key are put together in an encrypted key block, which is fed to the DVD read/write module 202 for recording onto the recordable DVD disc 250.

The title key is not stored. Instead, the DVD read/write module 202 records the value of zero on the disc 250 where normally the encrypted title key would be stored. Because of the present invention this is not a problem: when the value of zero is decrypted by a DVD player, the result will be equal to the title key.

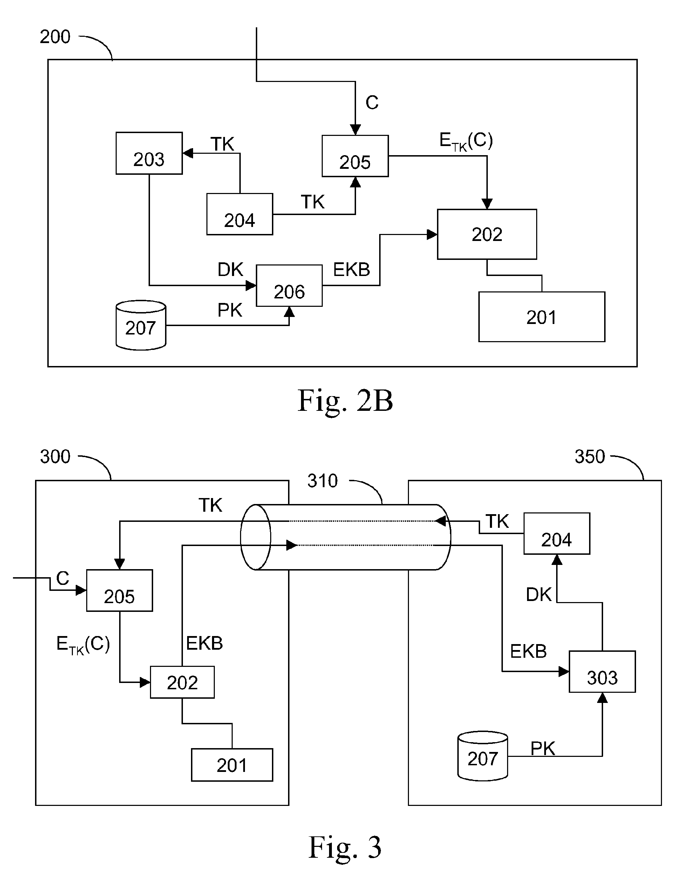

In a variation of this embodiment, the disc key determination module 203 does not itself choose the disc key, but instead receives at least part of the disc key, or a representative indication of the disc key from elsewhere. For example, an external server 350, discussed below with reference to Fig. 3, may provide the disc key to the device 200. If the device 200 is part of a larger system, for example embodied as a DVD drive in a personal computer, then another component of the system, such as a software application on the personal computer, can provide the disc key to the device 200.

The disc key may in such cases be received as a literal string to be used as the key, or a representative indication can be provided that is transformed into the disc key. For instance a cryptographic hash may be applied to the received indication and the output of such a hash can be used as the disc key. The disc key can be received in encrypted form, requiring a key such as the player key to decrypt the disc key before it can be used by the title key generation module 204.

In another variation it is assumed that the recordable DVD disc 250 is provided with an encrypted key block even before any encrypted content is recorded onto it. This enables the DVD read/write module 202 to read the encrypted disc key from the recordable DVD disc 250. The module 203 then decrypts the disc key using the player key available from memory 207 and feeds the result to modules 204 and 206 as above.

The client reads the disc key block from the disc, and forwards it to the server. The server decrypts the key block to get the disc key (or looks it up in a table). From this the server computes the title key which is used to CSS encrypt the content. Encrypted content and encrypted title key are sent to the client.

In a second embodiment shown in Fig. 2B the title key determination module 204 is configured to arbitrarily choose the title key and to feed the title key to the disc key determination module 203. The module 203 subsequently determines the disc key by searching a plurality of candidate disc keys for a candidate satisfying the requirement that the encryption of the title key using the candidate disc key equals the value zero. The disc key is then fed to the key block generation module 206 as explained above.

Although an exhaustive search is infeasible for many algorithms, it is certainly an option for the CSS algorithm where the disc key is only 40 bits long. Through cryptographic analysis of the CSS algorithm more efficient ways of searching for the right disc key can easily be devised. One such cryptographic analysis is publicly available as "Cryptanalysis of Contents Scrambling System" by Frank A. Stevenson, published on the Internet since 8th November 1999 at the URL http://www.cs.cmu.edu/~dst/DeCSS/FrankStevenson/analysis.html

The same variations as mentioned above for the reception of at least part of the disc key from elsewhere can also be applied for the title key.

The client 200 can be embodied as a standalone DVD recorder or DVD recorder module in a personal computer, allowing (typically) a home user to download and record content onto recordable DVD discs. The client 200 can also be used in commercial "burn on demand" environments, where a customer requests a particular title and a store representative records the particular title onto the recordable DVD disc using the client 200. The content can then be downloaded from a server or may be stored onto a storage medium accessible to the client 200, e.g. an array of hard disks internal or external to the client 200.

Fig. 3 schematically illustrates a client 300 and a server 350 cooperating in encrypting content using a title key in accordance with the DVD Content Scrambling System to produce encrypted content suitable for recording on the recordable DVD disc 250. Components of the client 300 that correspond to those of client 200 are indicated with the same reference number.

As already explained above, the server 350 may supply one of the title key and the disc key to the client 300 the method according to the invention. This is preferably done on request by the client 300. The client 300 then derives the other of the disc and title key and uses that to encrypt the content, as discussed with reference to Figs. 2A and 2B. The content itself may also be provided by the server 350 to the client 300, possibly together with one of the title key or disc key to be used. More complex forms of cooperation between the client 300 and the server 350 are also possible. Client 300 and server 350 may engage in a key agreement or establishment protocol to jointly create a key that is to be used as disc key or title key.

In the embodiment of Fig. 3, it is assumed that the recordable DVD disc 250 is provided with an encrypted key block even before any encrypted content is recorded onto it. In this embodiment the DVD read/write module 202 reads this encrypted key block from the recordable DVD disc 250. The key block is transmitted to the server 350. A disc key recovery module 303 in the server 350 decrypts the disc key from the key block and feeds the disc key to title key generation module 204 which computes the title key as the output of a decryption of the value zero using this disc key and provides the result back to the client 300.

Alternatively the server 350 may have direct access to the disc key given an identifier for the key block. In that case the client 300 may even provide only the identifier to the server 350 instead of the key block as a whole. The identifier could be constructed as a cryptographic hash or similar function applied to all or part of the key block.

At the client 300, the title key is then fed to the content encryption module 205 which encrypts the content using the title key and presents the encrypted content to the DVD read/write module 202 causing the module 202 to record the encrypted content onto the recordable DVD disc 250.

Alternatively the server 350 also encrypts the content with the title key and delivers the encrypted content to the client 300. The client 300 now records the content onto the disc 250 and so has no need to perform any en- or decryption operations.

Alternatively the client 300 may be configured to obtain the disc key and to communicate the disc key to the server 350. The disc key can be determined arbitrarily e.g. by putting disc key determination module 203 in the client 300, or be obtained from the encrypted key block by the client 300 instead of the server 350 by putting disc key recovery module 303 in the client 300. The server 350 then computes the title key as the output of a decryption of the value zero using the received disc key and provides the result back to the client 300.

Alternatively the client 300 may be configured to provide an arbitrarily chosen title key to the server 350. The server 350 then determines the applicable disc key by searching a plurality of candidate disc keys for a candidate satisfying the requirement that the encryption of the title key using the candidate disc key equals the value zero.

The server 350 then produces an encrypted key block comprising the disc key in question by encrypting this disc key multiple times, each time using a different player key. Although the client 300 may also be configured to perform this operation, that approach would require that all clients possess copies of some or all player keys, which is undesirable. By having this operation performed at the server 350, security is improved.

The encrypted key block can then be delivered instead of or in addition to the disc key itself. When delivering the encrypted key block instead of the disc key itself, there is no need to protect this delivery, as only an authorized player which has a player key, can recover the disc key from the encrypted key block. Transmitting the disc key itself in addition to the encrypted key block saves the effort of having to reconstruct the key at the client 300.

To protect against unauthorized access to the title key and/or the disc key, client 300 and server 350 should set up a secure authenticated channel 310 (SAC) to exchange this information, as is well known in the art. The key block may be transmitted over the SAC 310 as well, although this is not necessary since it only contains encrypted information.

In another embodiment it is the server 350 that chooses the title key and disc key such that an encryption of the title key using the disc key equals the value zero. Embodiments similar to the embodiments given above for device 200 are possible here and will only be discussed insofar elements differ from Figs. 2A or 2B.

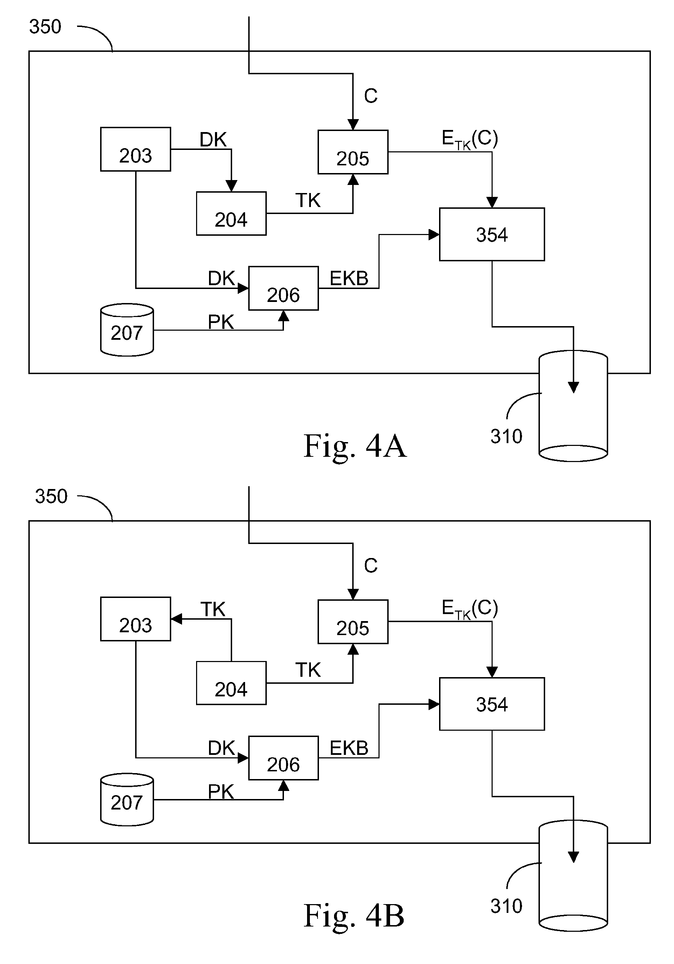

In Fig. 4A, the server 350 operates similar to device 200 as illustrated in Fig. 2A. The server 350 comprises disc key determination module 203 which is configured to arbitrarily choose the disc key. The disc key is then fed to title key generation module 204 which computes the title key as the output of a decryption of the value zero using the disc key. The title key is then fed to the content encryption module 205 which encrypts the content using the title key and presents the encrypted content to transmission module 354 for transmission to client 300.

In parallel the disc key is also fed to the key block generation module 206, which encrypts the disc key using the player keys stored in storage medium 207. This results in an encrypted key block, which is fed as well to the transmission module 354 for transmission to client 300.

In Fig. 4B the server 350 operates similar to device 200 as illustrated in Fig. 2B. The title key determination module 204 is configured to arbitrarily choose the title key and to feed the title key to the disc key determination module 203. The module 203 subsequently determines the disc key by searching a plurality of candidate disc keys for a candidate satisfying the requirement that the encryption of the title key using the candidate disc key equals the value zero. In other aspects the server 350 operates as in Fig. 4A.

All variations and options mentioned above for device 200 can of course also be applied to these embodiments of the server 350. The data transmissions from the server 350 to the client 300 may again be performed over secure authenticated channel 310.

The content to be recorded onto disc 250 may be available in a different encrypted form, for example in a DRM container such as defined in the Open Mobile Alliance DRM specification version 2.0. Before recording the content onto recordable DVD disc 250, the content needs to be decrypted from its original form and re-encrypted using the CSS encryption scheme. This can be done both by the client 300 or by the server 350.

If the client 300 is in possession of the applicable DRM content decryption key, the client 300 can simply decrypt the content and use the modules 203-207 as set out above to re-encrypt the content. The same goes for the server 350. Client 300 and server 350 may also cooperate in the re-encryption, as explained above.

A client device not capable of decrypting and/or re-encrypting the content itself, may present the DRM container to the server 350, which then performs the decryption and re-encryption as a service for this client device.

Optionally the encoding format of the content, e.g. MPEG-2, MPEG-4, DivX or similar, may need to be changed. This transcoding process can be done as part of the decryption and re-encryption process.

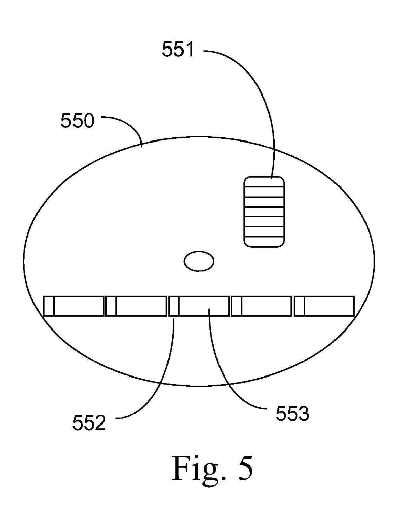

Fig. 5 schematically illustrates a recordable DVD disc 550 on which encrypted content has been recorded in accordance with the present invention. Similar to the prerecorded DVD disc 150 from Fig. 1, disc 550 comprises a table 551 in its lead-in area. This table 551 contains a plurality of encryptions of the disc key, each of which is encrypted with a different player key. Content is stored in sector 553 on the disc 550. Note that one content item, e.g. a movie or song, may be stored divided over plural sectors. Each sector may or may not be encrypted, possibly but not necessarily with different title keys stored in their associated sector headers. Other sectors may be empty, possibly available for the later recording of other content.

In contrast to sector header 152 that comprises an encrypted title key with which the content in sector 153 can be decrypted, sector header 552 comprises the value zero. Because of the standardized format of this header 552, the value zero is expressed as forty times the binary number '0'. On disc 550, in accordance with the present invention, the disc key is such that a decryption of this value zero using the disc key equals the title key. Thus, disc 550 can be used to record encrypted content provided a title key and disc key are used that are chosen such that a decryption of the value zero using the disc key equals the title key.

Initially the disc 550 will be devoid of content yet is provided with the table 551 with the encryptions of the disc key.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer.

In a device claim enumerating several means, several of these means can be embodied by one and the same item of hardware. The mere fact that certain measures are recited in mutually different dependent claims does not indicate that a combination of these measures cannot be used to advantage.

## Claims

1. A method of encrypting content using a title key in accordance with the DVD Content Scrambling System to produce encrypted content suitable for recording on a recordable DVD disc, the method comprising choosing the title key and a disc key such that an encryption of the title key using the disc key equals the value zero.

2. The method of claim 1, in which the disc key is agreed upon with another party and the title key is chosen as the output of a decryption of the value zero using the disc key.

3. The method of claim 2, in which the disc key is agreed upon by receiving it from the other party.

4. The method of claim 3, in which an encrypted key block is received from the other party, the key block containing an encrypted version of the disc key.

5. The method of claim 2, in which the disc key is agreed upon through a key establishment protocol executed with the other party.

6. The method of claim 1, in which the disc key is read from an encrypted key block present on the recordable DVD disc and the title key is chosen as the output of a decryption of the value zero using the disc key.

7. The method of claim 6, in which the title key is chosen by another party to whom the read disc key is communicated.

8. The method of claim 1, in which the disc key is chosen arbitrarily and the title key is chosen as the output of a decryption of the value zero using the disc key.

9. The method of claim 1, in which the title key is chosen arbitrarily and the disc key is chosen by searching a plurality of candidate disc keys for a candidate satisfying the requirement that the encryption of the title key using the candidate disc key equals the value zero.

10. The method of any of claims 8 or 9, further comprising the step of producing an encrypted key block comprising the chosen disc key.

11. The method of claim 1, in which the content is obtained by decrypting original content encrypted in accordance with a different encryption scheme.

12. A recordable DVD disc comprising content encrypted using a title key in accordance with the DVD Content Scrambling System and comprising a disc key having been encrypted using a player key, wherein the disc key is such that a decryption of the value zero using the disc key equals the title key.

13. The recordable DVD disc of claim 12, comprising an encrypted key block that comprises a number of encryptions of the disc key, each encryption having been performed using a different player key.

14. A device configured for encrypting content using a title key in accordance with the DVD Content Scrambling System to produce encrypted content suitable for recording on a recordable DVD disc, comprising means for choosing the title key and a disc key such that an encryption of the title key using the disc key equals the value zero.
